# FASCICULE DE BREVET EUROPEEN

(11) **EP 0 442 238 B1**
(45) Date de publication et mention de la délivrance du brevet: **02.02.1994**
(21) Numéro de dépôt: 90420577.0
(22) Date de dépôt: 28.12.1990
(51) Int. Cl.: B23D 61/02, B28D 1/12

(54) **Outil de coupe circulaire et rotatif composite**
Zusammengesetztes, rotierendes, kreisförmiges Schneidwerkzeug
Composite rotative circular cutting tool

(30) Priorité: 19.01.1990 FR 9000815
(43) Date de publication de la demande: 21.08.1991
(73) Titulaire: Demurger SA, F-42300 Roanne (FR)
(72) Inventeur: Rose, Régis, F-69450 Saint Cyr au Mont d'Or (FR); Souchon, Christian, F-42720 Vougy (FR)
(74) Mandataire: Laurent, Michel

(56) Documents cités:
- EP-A- 0 221 875
- CA-A- 1 063 747
- CH-A- 9 773
- CH-A- 244 405
- CH-A- 452 871
- DE-A- 3 039 063
- DE-A- 3 236 045
- DE-A- 3 605 517
- DE-A- 3 806 235
- DE-B- 1 088 408
- DE-U- 8 811 470
- FR-A- 2 196 214
- GB-A- 2 102 445
- US-A- 2 806 772

## Description

L'invention concerne un outil de coupe rotatif circulaire, notamment utilisé pour la découpe de produits ou objets en acier et autres matériaux, tel que par exemple le bois. Elle concerne plus spécifiquement un outil de découpe rotatif du type en question réalisé au moyen de deux matériaux différents.

Typiquement, les fraises-scies principalement concernées par l'invention, sont monoblocs. Elles présentent:
- en leur centre un moyeu d'entraînement, comprenant un alésage, et muni de trous d'entraînement afin de permettre une coopération avec un arbre moteur,
- et une couronne périphérique comprenant la zone de coupe effective,

L'ensemble forme une seule et même entité, généralement réalisée en acier dit "à coupe rapide".

La couronne périphérique des fraises-scies est dentée. D'une manière générale, ces dents présentent un espacement et une dureté pouvant varier d'une fraise-scie à l'autre, en fonction de son application et de sa vitesse de rotation.

De manière connue, le corps présente une certaine dépouille, typiquement de l'ordre de 1 à 2 %, destinée à permettre l'évacuation des copeaux du matériau découpé et la lubrification de la zone de découpe.

De tels outils monoblocs présentent par leur structure et leur conception mêmes, des inconvénients. Tout d'abord, seule la partie opérationnelle de la couronne périphérique doit présenter une dureté adaptée. Or, compte tenu de la conception, la totalité de la fraise-scie est réalisée avec le même alliage, ce qui implique outre un surcoût, l'obtention d'un outil lourd, et qui de plus, nécessite des réaffûtages périodiques de la zone de découpe proprement dite.Or ce réaffûtage est généralement sous-traité.Cela implique un stock important donc coûteux demandant une gestion relativement rigoureuse de ce parc. En outre, on aboutit par ces réaffûtages successifs à une perte de capacité de coupe de l'outil, compte tenu de la taille effectuée au sein même de la couronne périphérique en vue d'obtenir une forme voisine de celle de l'outil neuf.

De plus, en cas de choc, l'ensemble de l'outil est fragilisé, le rendant souvent impropre à des découpes ultérieures.

Enfin, compte tenu du caractère monobloc et massif de cet outil, il s'avère très bruyant à la coupe, rendant le travail des opérateurs pénible.

On a alors proposé un outil de coupe, qui soit tout d'abord léger, remplisse les mêmes fonctions que les outils de coupe rotatifs connus à ce jour, permette d'amortir en partie les vibrations inhérantes à la coupe proprement dite, et qui compte tenu de son prix de revient, rende inutile les réaffûtages périodiques et successifs et simplifie de fait la gestion du parc d'outils de coupe. Pour ce faire, on réalise le corps central de l'outil de coupe, de forme généralement circulaire, et comportant le moyeu d'entraînement de l'outil, en un matériau synthétique, sur lequel on fixe la couronne périphérique comportant la zone de coupe proprement dite. On a par exemple décrit un tel outil dans le document DE-U-8811470.

Or, si certes l'outil ainsi réalisé apporte un progrès technique, notamment au niveau de la diminution des vibrations lors de la coupe, et un gain de poids indéniable, en revanche, le mode de solidarisation de la couronne périphérique sur le corps central s'avère à ce jour peu satisfaisant. En effet, la solidarisation peut s'effectuer selon différentes manières. Tout d'abord, on peut simplement coller la couronne périphérique sur le corps central. On s'est vite aperçu que ce mode de fixation était insuffisant, compte tenu du couple généré au niveau de la couronne par le corps central.

On a alors proposé de doubler ce mode de solidarisation avec la mise en place de rivets ou de boulons, traversant la couronne périphérique et le corps central au niveau des zones de contact. Néanmoins, cela implique au moins une étape supplémentaire d'usinage de la couronne et du corps central, et de mise en place desdits rivets et/ou boulons, incompatible avec la réalisation industrielle de tels outils.

On a alors proposé de coller la couronne périphérique sur un support en forme de T, encastrable dans le corps central. Cette technique n'est pas satisfaisante compte tenu que le couple de l'arbre moteur est improprement transféré à la couronne périphérique, et ce, même si l'on prévoit des orifices dans ledit support, susceptible d'être remplis de la résine constituant le corps central.

Enfin,on a proposé de munir le support de la couronne périphérique d'évidements en forme de queue d'aronde, destinés à être remplis de la résine constituant le corps central de l'outil. Or ce mode de solidarisation s'avère totalement redhibitoire, compte tenu, que lors de la solidarisation de la résine, on observe généralement un retrait de la matière plastique, qui est altéré, voire empêché par la forme particulière en queue d'aronde des évidements du support.De la sorte les contraintes mécaniques liées au retrait de la matière plastique s'exercent de manière préférentielle selon une direction privilégiée, et non de manière isotrope, induisant une voilure résiduelle de l'outil de coupe, le rendant tout à fait impropre à l'usage.

L'invention vise à proposer un outil de coupe circulaire rotatif composite, dont la solidarisation de la couronne périphérique sur le corps central permet le transfert de la quasi-intégralité du couple de l'arbre moteur à la couronne périphérique comportant la zone de coupe, cette solidarisation, réalisable à l'échelle industrielle, n'engendrant pas voilure de l'outil résultant.

Cet outil de coupe rotatif, comporte :
- un corps de forme sensiblement plane et circulaire, réalisé en un matériau synthétique, et dont le centre comprend un moyeu destiné à permettre l'entraînement de l'outil ,
- et une couronne périphérique circulaire, comportant la zone de coupe proprement dite, réalisée en un matériau connu pour ses propriétés de coupe, solidarisée de manière irréversible sur le corps.

Il se caractérise en ce que la solidarisation est effectuée :
- d'une part, au moyen d'un tenon interne, parallèle et coplanaire avec la couronne périphérique, ménagé sur la face latérale interne de la couronne périphérique et faisant partie intégrante de celle-ci, coopérant avec le corps au niveau d'une gorge complémentaire ménagée sur la face latérale externe du corps,
- et d'autre part, au moyen de saillies radiales, issues du corps et coplanaires avec lui, coopérant avec le tenon au niveau d'interruptions périodiques de celui-ci.

En d'autres termes, l'invention consiste tout d'abord à munir la couronne périphérique d'un tenon, permettant d'éviter le déjantement de la couronne périphérique hors du corps, de par sa coopération avec la gorge complémentaire de celui-ci, y compris lors d'utilisations quelquefois anormales et très courtes dans le temps de tels outils de découpe. Ensuite, les saillies radiales du corps, coopérant avec le tenon, et par voie de conséquence avec la couronne périphérique, permettant de fournir à celle-ci le couple généré par l'arbre moteur sur le corps : on empêche en quelque sorte la couronne périphérique de patiner sur le corps.

Selon une caractéristique de l'invention, l'épaisseur du tenon est inférieure à l'épaisseur de la couronne périphérique proprement dite.

Selon une autre caractéristique de l'invention, les interruptions périodiques du tenon définissent des évidements, dont la forme générale est trapézoïdale, et évasée en direction du centre de l'outil. En outre, les différents angles ainsi définis sont arrondis, notamment par usinage, afin de faciliter le retrait de la matière synthétique lors de son durcissement.

Selon une autre caractéristique particulièrement avantageuse de l'invention, le corps de l'outil comporte des empreintes creuses oblongues, en forme d'arc, dirigées tout d'abord radialement à partir du centre du corps, puis qui s'infléchissent en direction de sa périphérie jusqu'à devenir pratiquement parallèle à la circonférence de l'outil. On s'est ainsi rendu compte, que cette structure particulière du corps, permet d'orienter les fibres de verre ou minérales inclues dans la matière plastique, parallèlement à la circonférence de l'outil au niveau de la périphérie du corps, et notamment, au niveau de la coopération des saillies du corps dans les évidements trapézoïdaux, favorisant de la sorte, la transmission du couple à la couronne périphérique, et augmentant la résistance mécanique du corps au niveau de cette zone périphérique, particulièrement solicitée lors de l'utilisation de l'outil.

Avantageusement, en pratique :
- le matériau synthétique constitutif du corps est choisi dans le groupe constitué par le polyester, les polyamides, les polyarylamides, et le polysulfure de phenylène, ou les mélanges de ces produits ;
- le materiau synthétique du corps est armé en fibres de verre ou chargé de matière minérale tel que le talc et le mica, éventuellement complété par des billes en ces matériaux ; cette charge additive est particulièrement efficace pour obtenir un outil présentant une bonne résilience, alliée à une bonne résistance mécanique nécessaire lors du travail de l'outil ; en outre elle permet d'accroître la planéïté du produit fini, qualité requise pour un grand nombre d'applications ;
- la couronne périphérique est réalisée dans un matériau choisi dans le groupe constitué par les aciers à coupe rapide,carbure de tungstène, le diamant artificiel, les céramiques, mélange de phases céramique-métal mieux connu sous le terme générique CERMET, etc. .

Dans une variante de réalisation, le corps est coloré dans la masse, selon un code correspondant à l'utilisation finale envisagée de l'outil.

La manière dont l'invention peut être réalisée et les avantages qui en découlent ressortiront mieux de l'exemple de réalisation qui suit, donné à titre indicatif et non limitatif, à l'appui des figures annexées.

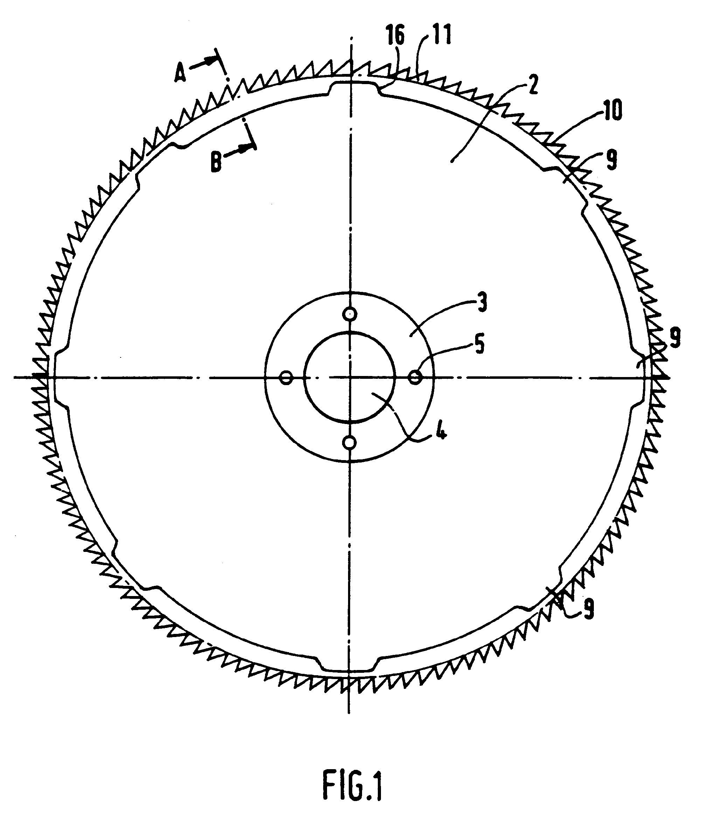

La figure 1 est une coupe transversale schématique d'une fraise-scie conforme à l'invention.

La figure 2 est une coupe effectuée au niveau de la ligne A-B de la figure 1 de la couronne périphérique conforme à l'invention.

la figure 3 est une coupe effectuée au niveau de la ligne A-B de la figure 1 du corps conforme à l'invention.

La figure 4 est une coupe transversale similaire à celle de la figure 1, d'une autre forme de réalisation de l'invention.

La fraise-scie (1) conforme à l'invention est fondamentalement constituée de deux parties respectivement, un corps central (2) et une couronne périphérique (10).

Le corps central (2), de forme circulaire, présente en son centre un moyeu (3), destiné à permettre l'adaptation de l'outil sur un arbre moteur. La solidarisation de ce moyeu sur ledit arbre s'effectue au moyen de goupilles non représentées, traversant les orifices (5) ménagés à cet effet sur le moyeu (3), et réalisés par exemple par usinage. Un alésage (4) permet d'engager l'arbre d'entrainement.

Selon l'invention, l'ensemble du corps (2) avec son moyeu (3) est réalisé en un matériau synthétique, par exemple en polyester chargé en fibres de verre et de matières minérales telles que notamment du talc et du mica. De fait, ce chargement en fibres de verre permet d'obtenir une très bonne planéité et surtout d'augmenter la résilience de l'outil final, tout en conservant la résistance mécanique, nécessaire lors du travail dudit outil. De manière connue, le corps (2) présente une légère dépouille au niveau de son diamètre extérieur, puis une augmentation de l'épaisseur au niveau du moyeu (3). Comme déjà dit, cette dépouille est essentiellement destinée à permettre l'évacuation des copeaux issus du matériau scié ou coupé, et simultanément à permettre une lubrification de la couronne périphérique de découpe (10).

La couronne périphérique (10), comporte les organes de coupe proprement dits, à savoir dans l'exemple décrit des dents (11). De manière connue, cette couronne périphérique (10) est réalisée en acier à coupe rapide connu pour cette application. Toutefois, les dents (11) peuvent présenter au niveau de leur extrémité supérieure une partie réalisée en un matériau très dur (12), par exemple en carbure de tungstène, en diamant artificiel, voire en CERMET, afin de renforcer la capacité de coupe.

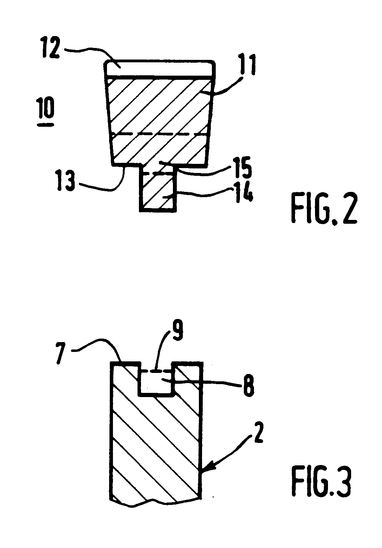

La couronne périphérique (10) présente une face latérale interne (13), destinée à venir s'accoler contre la face latérale externe (7) du corps (2) (voir figure 2 et 3).

Selon l'invention, la solidarisation de la couronne périphérique (10) au corps (2), s'effectue au moyen d'un tenon circulaire interne (14), ménagé sur la face latérale interne (13) de la couronne périphérique (10), et dirigé vers le centre de la fraise-scie (1). Ce tenon (14), dont l'épaisseur est inférieure à celle de la couronne périphérique proprement dite (10), est destiné à coopérer avec une gorge complémentaire (8), ménagée au niveau de la face latérale externe (7) du corps (2). Ainsi, tout déjantement de la couronne périphérique (10) hors du corps (2) est rendu impossible.

Le tenon (14) est interrompu périodiquement, pour ne devenir qu'une légère saillie (15) par rapport à la face latérale interne (13) de la couronne périphérique (10). De la sorte, ces interruptions définissent des évidements (16), de forme générale trapézoïdale, dont la base est située vers le centre du corps (2). Les différents angles définis par ces évidements sont arrondis, afin de permettre, comme il sera décrit ultérieurement, de favoriser le retrait de la matière plastique constitutive du corps (2), lors de son durcissement. Le tenon (14) et les évidements (16) sont réalisés par usinage de la couronne périphérique (10), et ce par tout moyen approprié.

Les évidements (16) sont destinés à coopérer avec le corps (2), et plus précisément avec des saillies (9) directement issues du corps (2) lors de la réalisation de l'outil, et venant combler de manière complémentaire ces évidements. De fait, la gorge annulaire (8) est comblée périodiquement, jusqu'à atteindre le niveau (9) sur la figure 3, en contact avec ladite saillie (15). De la sorte, on définit des ergots en relief (9) ménagés au niveau du corps (2), et destinés à coopérer avec la couronne périphérique (10), afin de transmettre à cette dernière le couple-moteur généré par l'arbre d'entrainement.

Le nombre d'ergots (9) correspondants dépend du diamètre de l'outil de découpe. Typiquement, il peut varier entre cinq et huit, ces indications n'étant nullement limitatives, mais uniquement illustratives. Par exemple, une fraise-scie de diamètre de 275 mm comporte huit ergots (9), la largeur de la couronne périphérique à leur niveau étant de 8 mm, et au niveau du tenon de 12,5 mm. Typiquement, l'épaisseur du tenon est voisine du tiers de l'épaisseur totale de la couronne périphérique.

La mise en place du corps (2) sur la couronne périphérique (10) s'effectue par injection du ou des matériaux synthétiques constitutifs du corps (2) dans un moule de forme appropriée, moule dans lequel la couronne périphérique (10) est préalablement positionnée.

De manière avantageuse, la couronne périphérique (10) présente une certaine dépouille, typiquement de 0 à 5·, telle que représentée sur la figure 2. Comme déjà précisé, cette dépouille est destinée à permettre d'une part, l'éjection des copeaux, et d'autre part, la lubrification de la zone de coupe. De fait, l'épaisseur de la couronne périphérique (10) au niveau de sa paroi latérale interne (13) correspond à celle du corps (2) au niveau de sa face latérale externe.

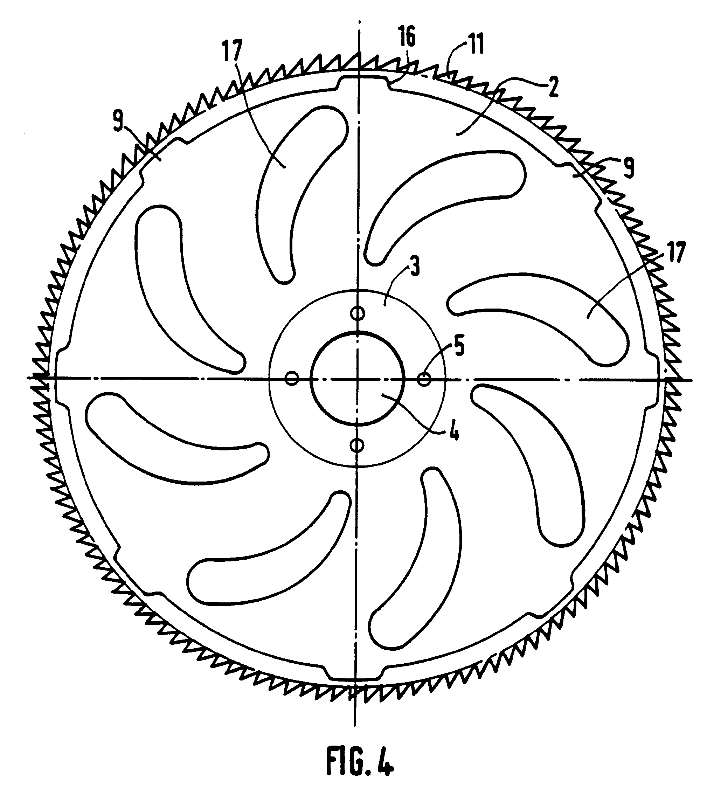

Dans une forme particulièrement avantageuse de l'invention représentée sur la figure 4, le corps (2) comporte des empreintes oblongues (17) en forme d'arc, s'étendant du moyeu (3) jusqu'au voisinage de la périphérie. Ces empreintes (17), issues du moulage, ont tout d'abord une direction sensiblement radiale au voisinage du moyeu (3), puis s'évasent en direction de la périphérie, jusqu'à adopter une direction sensiblement parallèle à la circonférence du corps (2). De la sorte, lors de l'injection de la matière plastique, les fibres de verre et les fibres minérales qu'elle contient subissent une orientation préférentielle parallèle à la circonférence du corps au voisinage de sa périphérie, et notamment au niveau des ergots (9), favorisant de la sorte la transmission du couple-moteur à la couronne périphérique (10).

De la sorte, l'outil de découpe rotatif ainsi obtenu peut être utilisé pour la découpe de tous matériaux, et notamment les aciers et les non-ferreux, ainsi que le bois, les matières plastiques et les produits alimentaires. Il suffit pour cela d'adapter l'alésage, la qualité du matériau constitutif de la couronne périphérique (10) et la forme des dents. En outre, ces outils de découpe présentent une très bonne capacité d'absorption des vibrations, diminuant de manière significative les bruits occasionnés lors de la découpe, et rendant ainsi le travail auprès des scies moins pénible.

En outre, la résilience de ces outils est très nettement améliorée par rapport aux outils de découpe connus à ce jour. En outre, en cas de bris des outils de découpe, particulièrement dangereux compte tenu de la vitesse de rotation, il n'y a pas d'éclats contrairement aux outils traditionnels. De la sorte, ils peuvent être utilisés en toute sécurité.

Enfin, le corps étant réalisé en matériau bon marché, le prix de revient de ces outils se trouve nettement diminué. De la sorte, l'opération de réaffûtage ne s'impose plus systématiquement. On peut ainsi éviter les problèmes de stock et de gestion de ce stock, qui se posaient jusqu'alors.

On peut également mentionner le fait, que compte tenu de ce mode original de solidarisation de la couronne périphérique sur le corps, il n'est plus à craindre d'obtenir des outils voilés, et donc inutilisables, et qu'en outre, on peut attendre une transmission quasi-intégrale du couple-moteur au niveau de la zone de coupe.

## Revendications

1. Outil de coupe circulaire rotatif, comprenant :
- un corps (2) de forme sensiblement plane et circulaire, réalisé en un matériau synthétique, et dont le centre comprend un moyeu (3) ,
- et une couronne périphérique circulaire (10) comportant la zone de coupe proprement dite (11,12), réalisée en matériau connu pour ses propriétés de coupe, solidarisée de manière irréversible sur le corps (2),
**caractérisé** en ce que la solidarisation de la couronne périphérique (10) sur le corps (2) est effectuée :
- d'une part, au moyen d'un tenon interne (14), parallèle et coplanaire avec la couronne périphérique (10), ménagé sur la face latérale interne (13) de la couronne périphérique (10) et faisant partie intégrante de celle-ci, coopérant avec le corps (2) au niveau d'une gorge complémentaire (8) ménagée sur la face latérale externe (7) du corps (2),
- et d'autre part, au moyen de saillies radiales (9), issues du corps (2) et coplanaires avec lui, coopérant avec le tenon (14) au niveau d'évidements (16) définis par des interruptions périodiques dudit tenon (14).

2. Outil de coupe selon la revendication 1, caractérisé en ce que l'épaisseur du tenon (14) est inférieure à l'épaisseur de la couronne périphérique (10) proprement dite dont il est issu.

3. Outil de coupe selon l'une des revendications 1 et 2, caractérisé en ce que les évidements (16) définis par les interruptions périodiques du tenon (14) ont une forme générale trapézoïdale, évasée en direction du centre du corps (2).

4. Outil de coupe selon la revendication 3, caractérisé en ce que les différents angles des évidements (16) sont arrondis, notamment par usinage.

5. Outil de coupe selon l'une des revendications 1 à 4, caractérisé en ce que le corps (2) comporte des empreintes creuses oblongues (17), en forme d'arc, dirigées tout d'abord radialement à partir du moyeu (3), puis qui s'infléchissent en direction de sa périphérie jusqu'à devenir pratiquement parallèle à la circonférence de l'outil.

6. Outil de coupe selon l'une des revendications 1 à 5, caractérisé en ce que le matériau synthétique du corps (2) est choisie dans le groupe constitué par le polyester, les polyamides, les polyarylamides, et le polysulfure de phénylène, ou le mélange de ces produits.

7. Outil de coupe selon la revendication 6, caractérisé en ce que le matériau synthétique constitutif du corps (2) est armé en fibres de verre ou fibres minérales.

8. Outil de coupe selon la revendication 7, caractérisé en ce que le matériau synthétique constitutif du corps (2) est complété de billes minérales, choisies dans le groupe constitué par le verre, le talc et le mica.

9. Outil de coupe selon l'une des revendications 1 à 8, caractérisé en ce que la couronne périphérique (10) est réalisée en un matériau choisi dans le groupe constitué par les aciers à coupe rapide, le carbure de tungstène, le diamant artificiel, les céramiques, et les mélanges de phases céramique-métal.

10. Outil de coupe selon l'une des revendications 1 à 9, caractérisé en ce que le corps (2) est coloré dans la masse, selon un code correspondant à l'utilisation finale de l'outil.

## Patentansprüche

1. Kreisförmiges, drehbares Schneidwerkzeug, mit:
- einem im wesentlichen ebenen und kreisförmigen Körper (2), der aus einem Kunststoff hergestellt ist und dessen Mittelpunkt eine Nabe (3) umfaßt,
- und einer kreisförmigen, die eigentliche Schneidzone (11, 12) tragenden Umfangs-Krone (10), die aus einem für seine Schneideigenschaften bekannten Material besteht und einstückig sowie unlösbar auf dem Körper (2) befestigt ist,
dadurch gekennzeichnet, daß die Befestigung der Umfangs-Krone (10) auf dem Körper (2) bewirkt wird:
- einerseits durch eine innere, zu der Umfangs-Krone (10) parallele und koplanare Ringschulter (14), die auf der inneren Randfläche (13) der Umfangs-Krone (10) angebracht und mit dieser einstückig ist, und die mit dem Körper (2) über eine komplementäre Ringnut (8) zusammenarbeitet, die auf der äußeren Randfläche (7) des Körpers (2) angebracht ist,
- und andererseits durch radiale, aus dem Körper (2) entstandene und mit diesem koplanare Vorsprünge (9), die mit der Ringschulter (14) über Ausnehmungen (16) zusammenarbeiten, die durch regelmäßige Unterbrechungen der Ringschulter (14) definiert werden.

2. Schneidwerkzeug nach Anspruch 1, dadurch gekennzeichnet, daß die Dicke der Ringschulter (14) kleiner ist als die Dicke der eigentlichen Umfangs-Krone (10), aus der sie entstanden ist.

3. Schneidwerkzeug nach Anspruch 1 oder 2, dadurch gekennzeichnet, daß die durch die regelmäßigen Unterbrechungen der Ringschulter (14) definierten Ausnehmungen (16) eine im wesentlichen trapezförmige Gestalt haben, die sich in Richtung auf den Mittelpunkt des Körpers (2) zu erweitert.

4. Schneidwerkzeug nach Anspruch 3, dadurch gekennzeichnet, daß die unterschiedlichen Ecken der Ausnehmungen (16) abgerundet sind, insbesondere durch Bearbeitung.

5. Schneidwerkzeug nach einem der Ansprüche 1 bis 4, dadurch gekennzeichnet, daß der Körper (2) hohle, langgestreckte Einprägungen (17) in Form eines Bogens umfaßt, die sich zunächst in radialer Richtung von der Nabe (3) aus erstrecken, dann in Richtung des Körperumfanges abgebogen sind, bis sie schließlich fast parallel zum Umfang des Werkzeuges verlaufen.

6. Schneidwerkzeug nach einem der Ansprüche 1 bis 5, dadurch gekennzeichnet, daß der Kunststoff des Körpers (2) aus einer Gruppe ausgewählt ist, die aus Polyester, Polyamiden, Polyarylamiden sowie Polysulfiden von Phenylen oder aus Mischungen dieser Substanzen besteht.

7. Schneidwerkzeug nach Anspruch 6, dadurch gekennzeichnet, daß das den Körper (2) bildende Kunststoffmaterial mit Glasfasern oder Mineralfasern verstärkt ist.

8. Schneidwerkzeug nach Anspruch 7, dadurch gekennzeichnet, daß das den Körper (2) bildende Kunststoffmaterial mit Kügelchen aus einem Mineral versetzt ist, das aus der aus Glas, Talkum und Glimmer bestehenden Gruppe ausgewählt wurde.

9. Schneidwerkzeug nach einem der Ansprüche 1 bis 8, dadurch gekennzeichnet, daß die Umfangs-Krone (10) aus einem Material besteht, das aus der Gruppe ausgewählt wurde, die aus den Schnellschneidstählen, Wolframcarbid, künstlichem Diamant, Keramiken und keramisch-metallischen Phasenmischungen besteht.

10. Schneidwerkzeug nach einem der Ansprüche 1 bis 9, dadurch gekennzeichnet, daß der Körper (2) in der Masse entsprechend einer Codierung eingefärbt ist, die dem Endgebrauch des Werkzeugs entspricht.

## Claims

1. Circular rotary cutting tool comprising:
- a body (2) of substantially plane and circular shape which is produced from a synthetic material and the centre of which comprises a hub (3),
- and a circular peripheral ring (10) comprising the actual cutting zone (11, 12), produced from a material known for its cutting properties and fastened irreversibly to the body (2),
characterised in that the fastening of the peripheral ring (10) to the body (2) is carried out:
- on the one hand, by means of an inner tenon (14) parallel to and coplanar with the peripheral ring (10), made on the inner lateral face (13) of the peripheral ring (10), forming an integral part of the latter and interacting with the body (2) in the region of a complementary groove (8) made on the outer lateral face (7) of the body (2),
- and, on the other hand, by means of radial projections (9) obtained from the body (2) and coplanar with it and interacting with the tenon (14) in the region of recesses (16) defined by periodic interruptions of the said tenon (14).

2. Cutting tool according to Claim 1, characterised in that the thickness of the tenon (14) is smaller than the thickness of the actual peripheral ring (10) from which it is obtained.

3. Cutting tool according to one of Claims 1 and 2, characterised in that the recesses (16) defined by the periodic interruptions of the tenon (14) have a general trapezoidal shape widened in the direction of the centre of the body (2).

4. Cutting tool according to Claim 3, characterised in that the various angles of the recesses (16) are rounded, especially by machining.

5. Cutting tool according to one of Claims 1 to 4, characterised in that the body (2) possesses arcuate oblong hollow indentations (17) which are first directed radially from the hub (3) and which then bend in the direction of its periphery until they become virtually parallel to the circumference of the tool.

6. Cutting tool according to one of Claims 1 to 5, characterised in that the synthetic material of the body (2) is selected from the group consisting of polyester, polyamides, polyarylamides and phenylene polysulphide or a mixture of these products.

7. Cutting tool according to Claim 6, characterised in that the component synthetic material of the body (2) is reinforced with glass fibres or mineral fibres.

8. Cutting tool according to Claim 7, characterised in that the component synthetic material of the body (2) is completed by mineral balls selected from the group consisting of glass, talc and mica.

9. Cutting tool according to one of Claims 1 to 8, characterised in that the peripheral ring (10) is produced from a material selected from the group consisting of high-speed steels, tungsten carbide, artificial diamond, ceramics and ceramic/metal phase mixtures.

10. Cutting tool according to one of Claims 1 to 9, characterised in that the body (2) is coloured in its mass according to a code corresponding to the final use of the tool.
